# EUROPEAN PATENT APPLICATION

(11) **EP 1 971 077 A1**
(43) Date of publication of application: **17.09.2008**
(21) Application number: 08102392.1
(22) Date of filing: 07.03.2008
(51) Int. Cl.: H04L 12/24, G06F 3/12, H04N 1/00

(54) **System and method for managing image forming apparatuses**

(30) Priority: 12.03.2007 KR 20070024229
(71) Applicant: SAMSUNG ELECTRONICS CO., LTD., Suwon-City, Kyungki-do (KR)
(72) Inventor: Park, Ji Min, Yangcheon-gu, Seoul (KR)
(74) Representative: Walaski, Jan Filip

(57) **Abstract**

A network management system capable of simultaneously setting environments of a plurality of image forming apparatuses connected to each other on a network to different values so as to allow a user to effectively and conveniently manage the image forming apparatuses. The network management system includes a plurality of image forming apparatuses and a terminal apparatus receiving an attribute file including IPs of the image forming apparatuses and attribute values of the IPs, parsing the received attribute file using a management program for managing the image forming apparatuses, generating attribute information of the image forming apparatuses according to the IPs thereof, and transmitting the attribute information.

## Description

The invention relates generally to a network management system, and more particularly to a network management system capable of simultaneously setting environments of a plurality of image forming apparatuses connected to each other on a network to different values and a method of managing the same.

As new low-price personal computers (PC) have developed with advances in PC manufacturing technology, computers have been extensively used. Accordingly, peripheral apparatuses of computers for effectively using the computers are also extensively used. The peripheral apparatuses include printers, scanners, photocopiers, and image forming apparatuses having a facsimile function. An image forming apparatus is known as a multifunction device when it has two or more functions such as both scanning and printing.

Accordingly, various network technologies of connecting a plurality of image forming apparatuses to each other on a network have become increasingly used. Accordingly, in specific environments where a plurality of image forming apparatuses are provided, the image forming apparatuses are connected to the network to allow many users to use the image forming apparatuses.

On the other hand, the manufacturing companies of the image forming apparatuses provide management programs by which a user effectively manages the image forming apparatuses connected to each other on a network in order to promote sales of the products of the manufacturing companies.

For example, the Web-SyncThru program of Samsung, the Centre Ware Web program of Fuji Xerox, and the Open View Network Node Manager program of Hewlett-Packard are all different types of management programs.

Users on the network execute the management programs provided in their terminal apparatuses to manage the image forming apparatuses connected to each other on the network. Therefore, the environments, or system configurations, of the plurality of image forming apparatuses are set.

A cloning method or a batch method is used for setting the environments of the plurality of image forming apparatuses. In the cloning method, after the environment of one image forming apparatus is set, the set value of the image forming apparatus is copied and transferred to the other image forming apparatus. In the batch method, a plurality of values are simultaneously set in the plurality of image forming apparatuses using the simple network management protocol (SNMP) or other protocols.

According to the above-described methods, the same value is set in the image forming apparatuses. However, the above-described methods cannot be used when various values are provided to one set value in each image forming apparatus like in the list of a file transfer protocol (FTP) or server message block (SMB) server and when different values must be set in the image forming apparatuses, respectively.

That is, in the cases of the cloning and the batch methods, the image forming apparatuses have the same FTP or SMB server. When it is necessary to separately set values, since a user must set a value in each image forming apparatus, it is inconvenient for the user to manage the image forming apparatuses, so that management efficiency deteriorates.

The present general inventive concept provides an apparatus and a method of setting values in corresponding image forming apparatuses of a network management system.

Additional aspects and utilities of the present general inventive concept will be set forth in part in the description which follows and, in part, will be obvious from the description, or may be learned by practice of the general inventive concept. The foregoing and/or other aspects and utilities of the present general inventive concept are achieved by providing a network management system including a plurality of image forming apparatuses and a terminal apparatus to receive an attribute file including IPs of the image forming apparatuses and attribute values of the IPs, to parse the received attribute file using a management program to manage the image forming apparatuses, to generate attribute information of the image forming apparatuses according to the IPs thereof, and to transmit the attribute information.

The image forming apparatuses may parse the attribute information received from the terminal apparatus, and also may update the attribute information using the parsed attribute information.

The terminal apparatus may call an import function for requesting update of the image forming apparatuses according to the IPs thereof by using the management program.

If the import function is called, the image forming apparatuses may parse the attribute information received from the terminal apparatus, and update the attribute information using the parsed attribute information.

The attribute file may have a comma separated value (CSV) format.

The image forming apparatus may include an input unit that receives the attribute information from the terminal apparatus, a parser that parses the received attribute information, and a controller that updates the image forming apparatus by using the parsed attribute information.

The input unit may determine if the import function is called by the terminal apparatus, and may receive the attribute information if the import function is called. The attribute information may have a CSV format.

The method may further include calling an import function to request update of the image forming apparatuses according to the IPs thereof after generating attribute information using the management program.

When updating the attribute information, if the import function is called, the generated attribute information may be received and analyzed and the image forming apparatuses may be updated by using the analyzed attribute information. The foregoing and/or other aspects and utilities of the present general inventive concept may also be achieved by providing a network management system, including a terminal apparatus connectable to a plurality of external image forming apparatuses, to generate attribute information and to transmit the generated attribute information to the image forming apparatuses to simultaneously update attribute files of the image forming apparatuses according to the attribute information.

The network management system may further include a display to display the attribute information when an export function in the management program is selected.

The attribute information corresponding to each of the image forming apparatuses may be updated when an import function in the management program is selected. Each of the image forming apparatuses may include a parser to parse the received attribute information, and a controller to update the image forming apparatuses using the parsed attribute information.

The foregoing and/or other aspects and utilities of the present general inventive concept may also be achieved by providing a computer readable recording medium having embodied thereon a computer program to execute a method, wherein the method comprises receiving an attribute file including IPs of the image forming apparatuses and attribute values of the IPs, parsing the received attribute file using the management program, generating attribute information of the image forming apparatuses according to the IPs thereof , and transmitting the attribute information, and parsing the received attribute information and updating the image forming apparatuses using the parsed attribute information.

Embodiments of the invention will now be described, by way of example, with reference to the accompanying drawings, in which:
Figure 1 is a block diagram of a network management system according to an embodiment of the present general inventive concept;
Figure 2 is a block diagram of image forming apparatuses according to an embodiment of the present general inventive concept;
Figure 3 illustrates an example of a management program according to an embodiment of the present general inventive concept;
Figure 4A illustrates an example of an attribute file according to an embodiment of the present general inventive concept;
Figure 4B illustrates an example of IPs of image forming apparatuses and attribute information on each IP according to the present general inventive concept; and
Figure 5 is a flowchart illustrating management processes of a network management system including image forming apparatuses according to an embodiment of the present general inventive concept.

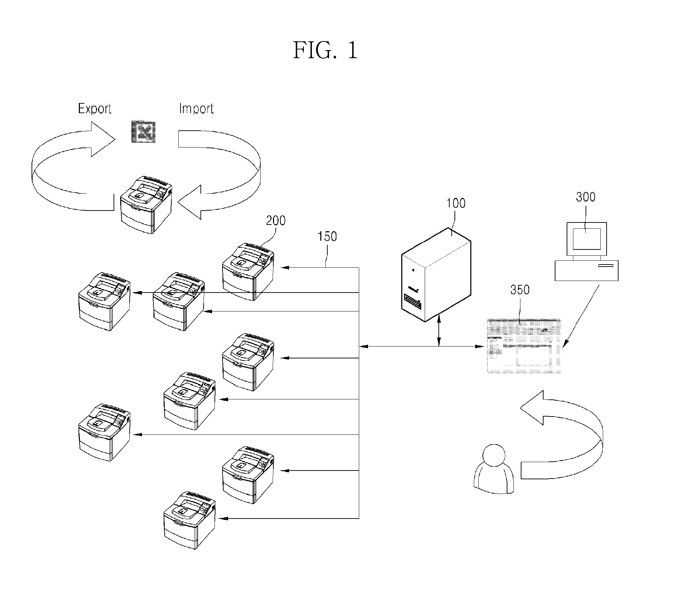

Figure 1 is a block diagram of a network management system according to an embodiment of the present general inventive concept. The network management system includes a terminal apparatus 100 in which a management program is provided, and a plurality of image forming apparatuses 200 connected to each other on a predetermined network 150.

The terminal apparatus 100 receives IP addresses (IPs) of image forming apparatuses 200 whose environments are to be set and an attribute file including the attribute values of the IPs, parses the input attribute file using the management program, generates attribute information on each of the IPs of the image forming apparatuses 200, and transmits the generated attribute information.

Here, the management program is software manufactured and distributed by a printer manufacturing company to effectively manage a network printer, for example, the image forming apparatuses 200. SyncThru® of Samsung is a representative program. The management program can be installed in the terminal apparatus, for example.

A simple network management protocol or a common management information protocol may be used as the protocol in the management program.

Hereinafter, the above-described structure will be described in more detail. First, a user accesses an embedded web server, inputs the IPs of the image forming apparatuses 200 whose environments are to be set and the attribute values of the IPs, and uploads the input IPs of the image forming apparatuses 200 and the attribute values of the IPs by the management program. It is possible that the image forming apparatus 200 may upload the IPs when being connected to the terminal apparatus 100.

That is, the terminal apparatus 100 receives an attribute file including the IPs of the image forming apparatuses 200 whose environments are to be set and the attribute values of the IPs from the user, and uploads the received attribute file using the management program provided in the terminal apparatus 100.

The attribute file includes the IPs of the image forming apparatuses 200 and the attribute values of the IPs, and the attribute values are values to set the environments of the image forming apparatuses 200. For example, when the attribute values of the image forming apparatuses 200 involve language information, the attribute values can be "English" or "Japanese." Other attribute values in the attribute file may involve values corresponding to printing attributes, control attributes, command attributes, option attributes, feature attributes, etc. The environments of the image forming apparatuses 200 may be files including a plurality of attribute files, other specialized attributes, etc.

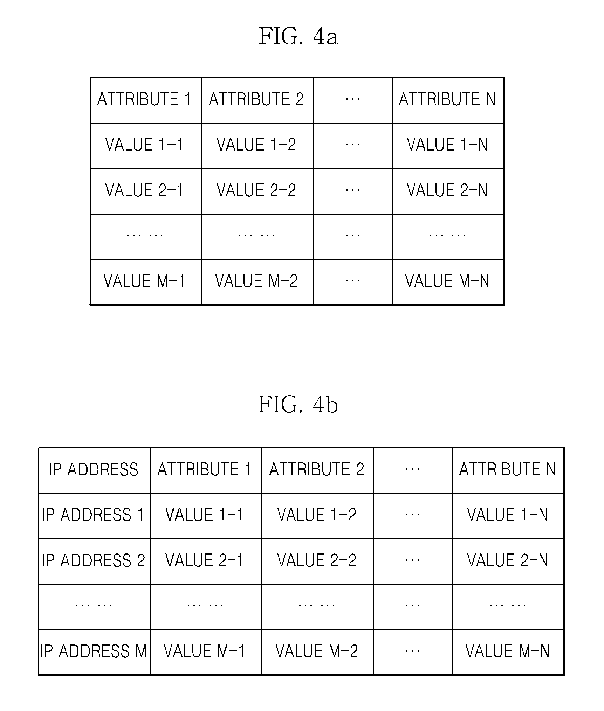

Figure 4A illustrates an example of an attribute file according to an embodiment of the present general inventive concept. As illustrated in Figure 4A, the attribute file may be input as a comma separated value (CSV).

The CSV is data in which items are separated by a comma. Such a form is used in order to preserve a database or table calculating software data.

Since the file in the form of the CSV is preserved as a text file to be read or edited by a document processor or an editor, and is widely used in many applications, a data file is converted into the CSV form to be transmitted and received when data of an address book or a table is transmitted and received between a personal digital assistant (PDA) and a personal computer (PC).

After uploading the input attribute file to the management program provided in the terminal apparatus 100, when a command signal to set the environments of the image forming apparatuses 200 is input by the user, the terminal apparatus 100 parses the uploaded attribute file using the management program, generates attribute information on each of the IPs of the image forming apparatuses 200, and transmits the generated attribute information.

Figure 4B illustrates an example of IPs of image forming apparatuses and attribute information on each IP according to an embodiment of the present general inventive concept. As illustrated in Figure 4B, the terminal apparatus 100 generates attribute information on each of the IPs of the image forming apparatuses 200 and calls an import function to request each of the IPs of the image forming apparatuses 200 to be updated using the management program.

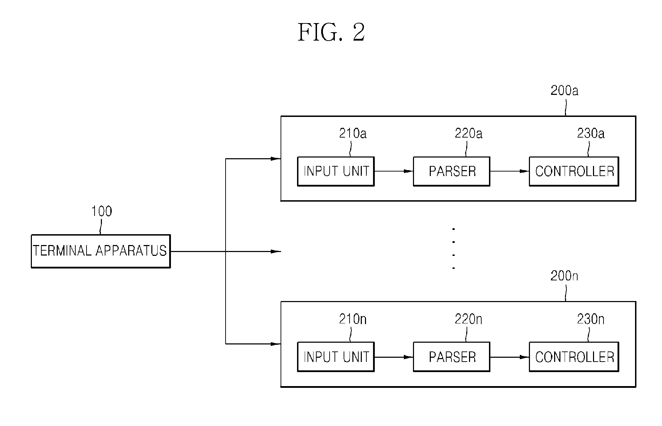

Referring to Figure 2, when the terminal apparatus 100 and the plurality of image forming apparatuses 200a to 200n are connected to each other on the network 150, the terminal apparatus 100 generates the attribute information corresponding to each of the IPs of every individual image forming apparatus 200a to 200n, and calls the import function to the image forming apparatuses 200a to 200n of a corresponding IP using the IPs of the image forming apparatuses 200a to 200n.

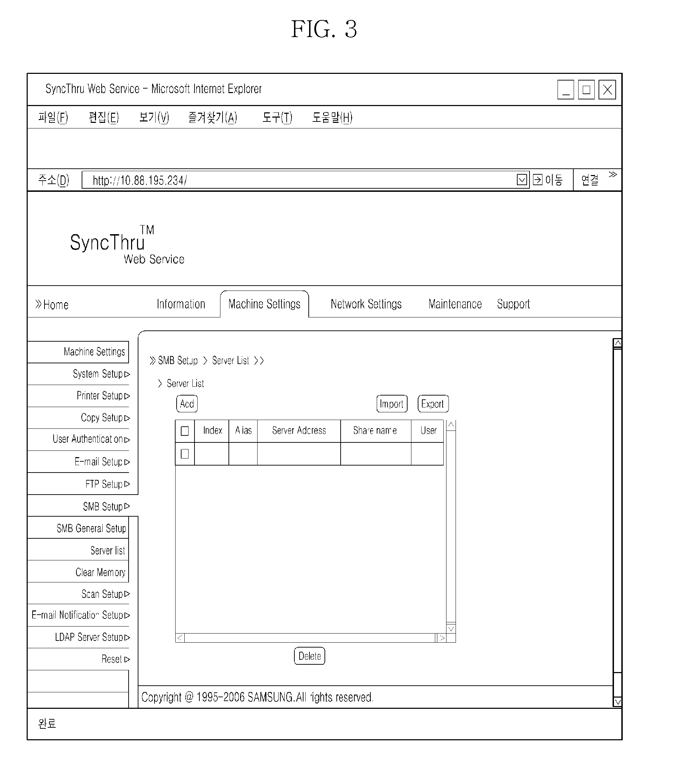

Figure 3 illustrates an example of a management program according to an embodiment of the present general inventive concept. As illustrated in Figure 3, the management program includes an import button and an export button. When the import button is selected, the image forming apparatuses 200a to 200n are updated by the attribute information including the attribute values received from the user. When the export button is selected, the attribute values stored in the image forming apparatuses 200a to 200n are output in the form of a list to be displayed to the user. The list of stored attribute information may be displayed on a display unit 300 with a display screen 350, as illustrated in Figure 1, which can include a monitor, LCD Screen, etc.

Then, the image forming apparatuses 200 receive the transmitted attribute information and parse the received attribute information to be updated by the parsed attribute information.

The image forming apparatuses 200a to 200n may be independent of each other. Although the plurality of image forming apparatuses 200a to 200n are connected to each other on the network 150, since the image forming apparatuses 200a to 200n separately operate, it is possible to set the environments of each of the image forming apparatuses 200a to 200n to different values.

Therefore, since the user is not required to separately set the environments of the image forming apparatuses 200a to 200n, it is possible to effectively and efficiently manage the image forming apparatuses 200a to 200n.

Figure 2 is a block diagram of image forming apparatuses according to an embodiment of the present general inventive concept. As illustrated in Figure 2, the image forming apparatuses 200 include input units 210a - 210n, parsers 220a - 220n, and controllers 230a - 230n.

First, the input units 210 receive attribute information from the terminal apparatus 100.

Each of the attribute values may be separated by commas to be stored in the attribute information in the form of the CSV. Since the attribute information on the image forming apparatuses whose environments are to be set is transmitted from the terminal apparatus 100, the image forming apparatuses 200 are updated by the transmitted attribute information.

In detail, the input units 210 determine whether the import function is called from the terminal apparatus 100. When the import function is called, the attribute information is received.

That is, after generating the attribute information on each of the IPs of the image forming apparatuses 200, since the terminal apparatus 100 calls the import function to request each of the IPs of the image forming apparatuses 200 to be updated using the management program, the input units 210 of the image forming apparatuses 200 determine whether the import function is called from the terminal apparatus 100 to receive the attribute information when it is determined that the import function is called.

Then, the parsers 220 parse the input attribute information and the controllers 230 update the image forming apparatuses 200 by the parsed attribute information. That is, the parsers 220 analyze the input attribute information and the controllers 230 update the image forming apparatuses 200 using the analyzed attribute information.

Hereinafter, management processes of a network management system including image forming apparatuses will be described.

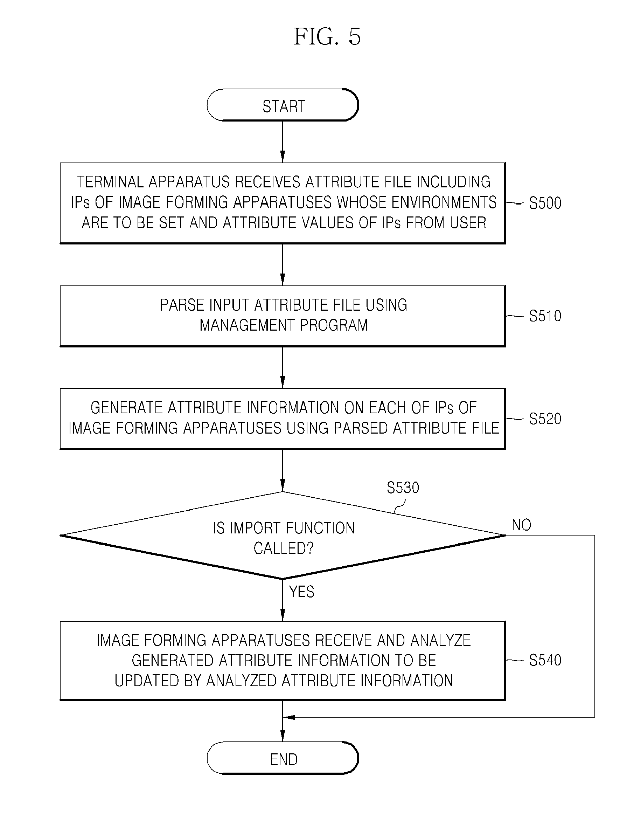

Figure 5 is a flowchart illustrating management processes of a network management system including image forming apparatuses according to an preferred embodiment of the present general inventive concept. As illustrated in Figure 5, a terminal apparatus receives an attribute file including the IPs of image forming apparatuses whose environments are to be set and the attribute values of the IPs in operation S500.

Then, the input attribute file is parsed using the management program provided in the terminal apparatus in operation S510.

The attribute file may be in the form of a CSV.

Then, attribute information on each of the IPs of the image forming apparatuses 200 is generated using the parsed attribute file in operation S520.

As described above, the terminal apparatus may further call an import function to request each of the IPs of the image forming apparatuses 200 to be updated after generating the attribute information using the management program.

Therefore, it is determined whether the import function is called from the terminal apparatus in operation S530. When it is determined that the import function is called, the image forming apparatuses 200 receive the attribute information and analyze the received attribute information to be updated by the analyzed attribute information in operation S540.

The image forming apparatuses 200 may be independent of each other.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system.

Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

As described above, in a network management system according to an embodiment of the present general inventive concept and the method of managing the same, environments of a plurality of image forming apparatuses connected to each other on the network can be simultaneously set to different values, so that a user can effectively manage the image forming apparatuses.

That is, since the environments of the plurality of image forming apparatuses can be simultaneously set to different values, the setting speed can be improved when setting the environments of the image forming apparatuses.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A network management system, comprising:
means for receiving an attribute file including network addresses of a plurality of image forming apparatuses connected to a network and attribute values associated with the addresses, the receiving means arranged to generate attribute information for the image forming apparatuses according to the network addresses thereof, and to transmit the attribute information to the image forming apparatuses.

2. The network management system as claimed in claim 1, further comprising the plurality of image forming apparatuses, wherein the network addresses comprise IP addresses.

3. The network management system as claimed in claim 1 or 2, wherein the receiving means comprises a terminal apparatus arranged to parse the received attribute file using a management program for managing the image forming apparatuses.

4. The network management system as claimed in claim 3, wherein the image forming apparatuses are arranged to parse the attribute information received from the terminal apparatus, and update the attribute information using the parsed attribute information.

5. The network management system as claimed in claim 3 or 4, wherein the terminal apparatus is arranged to call an import function to request an update of the image forming apparatuses according to the network addresses thereof using the management program.

6. The network management system as claimed in claim 5, wherein, if the import function is called, the image forming apparatuses are arranged to parse the attribute information received from the terminal apparatus, and update the attribute information using the parsed attribute information.

7. The network management system as claimed in any one of claims 2 to 5, wherein the attribute file has a comma separated value (CSV) format.

8. The network management system as claimed in any one of claims 2 to 7, wherein each image forming apparatus comprises:
an input unit arranged to receive the attribute information from the terminal apparatus;
a parser arranged to parse the received attribute information; and
a controller arranged to update the image forming apparatus by using the parsed attribute information.

9. The network management system as claimed in claim 8, wherein the input unit is arranged to determine whether the import function is called by the terminal apparatus, and to receive the attribute information if the import function is called.

10. The network management system as claimed in any one of the preceding claims, wherein the attribute file includes different attribute values for two or more of the plurality of image forming apparatuses.

11. A method of managing a plurality of image forming apparatuses, the method comprising:
receiving an attribute file including network addresses of the image forming apparatuses and attribute values associated with the addresses;
generating attribute information for the image forming apparatuses according to the network addresses thereof; and
transmitting the attribute information to the image forming apparatuses.

12. A method according to claim 11, wherein the image forming apparatuses are connected, through a network, to a terminal apparatus having a management program, the method further comprising
parsing the received attribute file using the management program; and
parsing the received attribute information at the image forming apparatuses and updating the image forming apparatuses using the parsed attribute information.

13. The method as claimed in claim 12, wherein the network addresses comprise internet protocol (IP) addresses, further comprising:
calling an import function to request an update of the image forming apparatuses according to the IP addresses thereof after generating attribute information using the management program.

14. The method as claimed in claim 13, wherein, during the updating of the attribute information, if the import function is called, the generated attribute information is received and analyzed and the image forming apparatuses are updated by using the analyzed attribute information.

15. The method as claimed in any one of claims 11 to 14, wherein the attribute file has a CSV format.

16. A network management system, comprising:
a terminal apparatus connectable to a plurality of external image forming apparatuses, the terminal apparatus arranged to generate attribute information, and to transmit the generated attribute information to the image forming apparatuses to simultaneously update attribute files of the image forming apparatuses according to the attribute information.

17. The network management system of claim 16, further comprising:
a display to display the attribute information when an export function in the management program is selected.

18. The network management system of claim 16 or 17, wherein the attribute information corresponding to each of the image forming apparatuses is updated when an import function in the management program is selected.

19. The network management system of claim 16, 17 or 18, wherein each of the image forming apparatuses comprises:
a parser arranged to parse the received attribute information; and
a controller arranged to update the image forming apparatuses using the parsed attribute information.

20. A computer program which, when executed by a processor, causes the method of anyone of claims 11 to 14 to be performed.
